(19) Europäisches Patentamt
European Patent Office
Office européen des brevets

(11) EP 3 162 822 B1

(12) # EUROPEAN PATENT SPECIFICATION

(45) Date of publication and mention of the grant of the patent:
**26.08.2020 Bulletin 2020/35**

(21) Application number: **15812646.6**

(22) Date of filing: **23.06.2015**

(51) Int Cl.:
***C08F 216/16*** (2006.01) ***C09D 4/00*** (2006.01)
***C09D 11/30*** (2014.01) ***C09D 11/101*** (2014.01)

(86) International application number:
**PCT/JP2015/068086**

(87) International publication number:
**WO 2015/199092 (30.12.2015 Gazette 2015/52)**

(54) **MONOMER COMPOSITION AND CURABLE COMPOSITION CONTAINING SAME**

MONOMERZUSAMMENSETZUNG UND HÄRTBARE ZUSAMMENSETZUNG DAMIT

COMPOSITION DE MONOMÈRES ET COMPOSITION DURCISSABLE LA CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2014 JP 2014133057**

(43) Date of publication of application:
**03.05.2017 Bulletin 2017/18**

(73) Proprietor: **Daicel Corporation**
**Osaka-shi, Osaka 530-0011 (JP)**

(72) Inventors:
- **MIZUTA, Tomoya**
**Tokyo 108-8230 (JP)**
- **INOUE, Keizo**
**Himeji-shi**
**Hyogo 671-1283 (JP)**

(74) Representative: **Grünecker Patent- und Rechtsanwälte**
**PartG mbB**
**Leopoldstraße 4**
**80802 München (DE)**

(56) References cited:
**EP-A1- 2 226 367**
**WO-A1-2011/125538**
**JP-A- H09 183 927**
**JP-A- 2007 137 926**
**JP-A- 2007 211 098**
**JP-A- 2010 007 000**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 162 822 B1

**Description**

Technical Field

The present invention relates to a monomer composition, and a curable composition containing the monomer composition. The curable composition is advantageously used for UV-curable inkjet inks. This application claims priority to Japanese Patent Application No. 2014-133057, filed June 27, 2014 to Japan.

Background Art

Inkjet recording is a technique in which ink droplets are ejected (jetted) onto a recording medium to form recording dots as printing. This technique does not require master plates and is advantageously used in small-quantity wide-variety printing applications. Known inkjet inks for use in the inkjet recording include cationically-curable inks and radically-curable inks.

The radically-curable inks have been widely used typically because these inks have rapid curability and can be derived from a wide variety of monomers. However, the inkjet recording technique employs low-viscosity inks from the viewpoint of dischargeability, which allow oxygen in the air to readily diffuse/migrate into the inks. In addition, such inks, as being formed into small droplets upon printing, have a large surface area and are readily exposed to oxygen. Disadvantageously, therefore, the radically-curable inks significantly suffer from cure inhibition by oxygen and are inhibited from curing by oxygen. This causes the radically-curable inks to bleed and/or to include large amounts of residual, unreacted monomers which cause odors. Additionally disadvantageously, the radically-curable inks have poor substrate adhesion and require processing on the substrate surface so as to offer better adhesion.

In contrast, the cationically-curable inks do not suffer from cure inhibition by oxygen. In addition, these inks are known to have superior substrate adhesion as compared with the radically-curable inks. Patent Literature (PTL 1), PTL 2, and PTL 3 describe that cationically-curable inks each including a dispersion medium and a pigment can form ink layers having excellent curability and excellent substrate adhesion (adhesion to the substrate), when monomers constituting the dispersion medium contain a vinyl ether compound having a cyclic ether skeleton in an amount of 30 weight percent or more of all monomers contained in the dispersion medium. PTL 4 discloses a monomer composition containing a hydroxy-containing vinyl ether compound in an amount of 20 wt%, wherein the monofunctional monomer content is 20 wt%.

Citation List

Patent Literature

PTL 1: Japanese Unexamined Patent Application Publication (JP-A) No. 2005-154734
PTL 2: JP-A No. 2007-211098
PTL 3: JP-A No. 2007-211099
PTL 4: JP-A No. 2007-137926

Summary of Invention

Technical Problem

However, such cationically-curable inks containing a vinyl ether compound having a cyclic ether skeleton in a content within the range were found to be practically unsuitable. This is because the vinyl ether compound having a cyclic ether skeleton tends to absorb moisture (water) and thereby causes the cationically-curable inks to be susceptible to cure inhibition by water and to undergo curing failure when used in high-humidity periods and/or when absorbing moisture from the air during the storage process.

Accordingly, the present invention has an object to provide a monomer composition that has rapid curability and can be rapidly cured even in the presence of oxygen and/or water, to form a cured product having excellent adhesion to a wide variety of substrates.

The present invention has another object to provide a curable composition including the monomer composition and a photoacid generator.

The present invention has yet another object to provide a UV-curable inkjet ink including the curable composition and a pigment.

Solution to Problem

After intensive investigations to achieve the objects, the inventors of the present invention found a monomer composition as follows. This monomer composition contains, as vinyl ether compounds, a hydroxy-free multifunctional vinyl ether compound and a hydroxy-containing vinyl ether compound in combination. The monomer composition contains the hydroxy-free multifunctional vinyl ether compound in an amount of 5 to 80 weight percent, and the hydroxy-containing vinyl ether compound in an amount of 0.1 weight percent to less than 10 weight percent, where all weight percentages are based on the total weight of the monomer composition. The monomer composition also contains a monofunctional monomer in an amount of 20 to 80 weight percent of the total weight of the monomer composition. The inventors also found that the monomer composition, when incorporated with a photoacid generator, gives a curable composition that has excellent curing sensitivity and, upon ultraviolet irradiation, can be rapidly cured even in the presence of oxygen and/or water, to form a cured product having excellent adhesion to a wide variety of substrates (namely, having selectivity to a wide variety of substrates). The present invention has been made on the basis of these findings.
Specifically, the present invention provides a monomer composition comprising monofunctional cationically polymerizable monomer(s) and multifunctional cationically polymerizable monomer(s), the content of the monofunctional cationically polymerizable monomer(s) being 20 to 80 weight percent of the total weight of the monomer composition; wherein the monofunctional cationically polymerizable monomer(s) and multifunctional cationically polymerizable monomer(s) include vinyl ether compounds (A) and further include an oxetane compound (B) and/or an epoxy compound (C), wherein the vinyl ether compounds (A) comprise:a hydroxy-free multifunctional vinyl ether compound in an amount of 5 to 80 weight percent of the total weight of the monomer composition; and a hydroxy-containing vinyl ether compound in an amount of 0.1 weight percent to less than 10 weight percent of the total weight of the monomer composition.
In the monomer composition, the hydroxy-free multifunctional vinyl ether compound may include at least one of a multifunctional vinyl ether compound having a cyclic ether skeleton and a multifunctional vinyl ether compound having an alicyclic skeleton.
The monomer composition may have a content of a vinyl ether compound having a cyclic ether skeleton of less than 30 weight percent of the total weight of the monomer composition.
Preferably, the oxetane compound (B), which is a monomer, is present in an amount of at least 5 weight percent of the total weight of the monomer composition.
Preferably, the epoxy compound (C), which is a monomer, is present in an amount of at least 5 weight percent of the total weight of the monomer composition.
The present invention provides, in another aspect, a curable composition containing the monomer composition and a photoacid generator.
The curable composition may further contain a sensitizer alone or in combination with a sensitizing auxiliary.
The curable composition may be used for a UV-curable inkjet ink.
In addition and advantageously, the present invention provides a UV-curable inkjet ink containing the curable composition and at least one selected from the group consisting of pigments and dyes.
The UV-curable inkjet ink may further contain a dispersant.
Specifically, the present invention provides a monomer composition comprising monofunctional cationically polymerizable monomer(s) and multifunctional cationically polymerizable monomer(s), the content of the monofunctional cationically polymerizable monomer(s) being 20 to 80 weight percent of the total weight of the monomer composition; wherein the monofunctional cationically polymerizable monomer(s) and multifunctional cationically polymerizable monomer(s) include vinyl ether compounds (A) and further include an oxetane compound (B) and/or an epoxy compound (C), wherein the vinyl ether compounds (A) comprise:

a hydroxy-free multifunctional vinyl ether compound in an amount of 5 to 80 weight percent of the total weight of the monomer composition; and
a hydroxy-containing vinyl ether compound in an amount of 0.1 weight percent to less than 10 weight percent of the total weight of the monomer composition.

Also provided is a curable composition containing the monomer composition according to the invention and a photoacid generator.
Further provided are the use of the curable composition according to the invention in a UV-curable inkjet ink and a UV-curable inkjet ink containing the curable composition according to the invention and at least one selected from the group consisting of pigments and dyes.
Preferred embodiments of the present invention are set forth in the dependent claims.

Advantageous Effects of Invention

The monomer composition according to the present invention has the above-mentioned configuration and, when incorporated with a photoacid generator, gives a curable composition as follows. This curable composition has low viscosity and offers excellent dischargeability before ultraviolet irradiation, and, upon ultraviolet irradiation, can be rapidly cured even in the presence of oxygen and/or water, to form a cured product having excellent adhesion to a wide variety of substrates. The curable composition resists deterioration in curability even when absorbing moisture (water) from the air during the storage process. Namely, the curable composition has excellent storage stability. In addition, the curable composition according to the present invention, as having excellent curability, less causes monomers to remain as unreacted, and significantly less causes odors derived from such unreacted monomers. Thus, the curable composition according to the present invention is advantageously usable in or for UV-curable inkjet inks.

The UV-curable inkjet ink according to the present invention contains the curable composition having the characteristic properties and, when used, can form an ink layer with extremely high definition in an air atmosphere at high speed, where the ink layer can be formed without limitations on humidity conditions and substrates (articles to be printed), while less suffering from odor generation. The UV-curable inkjet ink according to the present invention is therefore advantageously usable in the field of industrial printing.

Description of Embodiments

Vinyl Ether Compounds (A)

Vinyl ether compounds are monomers (in particular, cationically polymerizable monomers) containing a vinyl ether group as a polymerizable group. The monomer composition according to the present invention contains a hydroxy-free multifunctional vinyl ether compound and a hydroxy-containing vinyl ether compound, both of which are vinyl ether compounds.

The hydroxy-free multifunctional vinyl ether compound (multifunctional vinyl ether compound devoid of hydroxy groups) is a compound containing two or more vinyl ether groups per molecule and is represented typically by Formula (a-1) :

$$R\text{-}(O\text{-}CH{=}CH_2)_s \qquad \text{(a-1)}$$

where R is selected from a s-valent hydrocarbon group, s-valent heterocyclic group, and a s-valent group including two or more of these groups bonded to each other through a single bond or a linkage group; and s represents an integer of 2 or more.

The hydrocarbon group includes aliphatic hydrocarbon groups, alicyclic hydrocarbon groups, and aromatic hydrocarbon groups.

Non-limiting examples of divalent aliphatic hydrocarbon groups include $C_1$-$C_{20}$ linear or branched alkylene such as methylene, ethylene, propylene, trimethylene, tetramethylene, hexamethylene, octamethylene, decamethylene, and dodecamethylene; and $C_2$-$C_{20}$ alkenylene such as vinylene and propenylene. Examples of the s-valent aliphatic hydrocarbon group include groups resulting from further removing "s - 2" hydrogen atom(s) each from the structural formulae of the divalent aliphatic hydrocarbon groups.

Alicyclic rings constituting the alicyclic hydrocarbon groups include monocyclic hydrocarbon rings and polycyclic hydrocarbon rings (spiro hydrocarbon rings, hydrocarbon ring assemblies, bridged hydrocarbon rings, fused hydrocarbon rings, and bridged fused hydrocarbon rings). Examples of the s-valent alicyclic hydrocarbon group include groups resulting from removing "s" hydrogen atoms each from the structural formulae of the alicyclic rings.

Non-limiting examples of the monocyclic hydrocarbon rings include $C_3$-$C_{12}$ cycloalkane rings such as cyclopropane, cyclobutane, cyclopentane, cyclohexane, cycloheptane, and cyclooctane rings; and $C_3$-$C_{12}$ cycloalkene rings such as cyclopentene and cyclohexene rings.

Non-limiting examples of the spiro hydrocarbon rings include $C_5$-$C_{16}$ spiro hydrocarbon rings such as spiro[4.4]nonane, spiro[4.5]decane, and spiro bicyclohexane rings.

Non-limiting examples of the hydrocarbon ring assemblies include hydrocarbon ring assemblies each including two or more of $C_5$-$C_{12}$ cycloalkane rings such as bicyclohexane ring.

Non-limiting examples of the bridged hydrocarbon rings include bicyclic hydrocarbon rings such as pinane, bornane, norpinane, norbornane, norbornene, bicycloheptane, bicycloheptene, and bicyclooctane (such as bicyclo[2.2.2]octane and bicyclo[3.2.1]octane) rings; tricyclic hydrocarbon rings such as homobledane, adamantane, tricyclo[5.2.1.$0^{2,6}$] decane, and tricyclo[4.3.1.$1^{2,5}$]undecane rings; and tetracyclic hydrocarbon rings such as tetracyclo[4.4.0.$1^{2,5}$.$1^{7,10}$]dodecane and perhydro-1,4-methano-5,8-methanonaphthalene rings.

Non-limiting examples of the fused hydrocarbon rings include fused rings each including two or more of 5- to

8-membered cycloalkane rings fused to each other, such as perhydronaphthalene (decahydronaphthalene), perhydroanthracene, perhydrophenanthrene, perhydroacenaphthene, perhydrofluorene, perhydroindene, and perhydrophenalene rings.

Non-limiting examples of the bridged fused hydrocarbon rings include dimers of dienes, including dimers of cycloalkadienes such as cyclopentadiene, cyclohexadiene, and cycloheptadiene; and hydrogenated derivatives of them.

Non-limiting examples of aromatic rings constituting the aromatic hydrocarbon groups include aromatic rings having 6 to 14 carbon atoms, such as benzene and naphthalene rings, of which those containing 6 to 10 carbon atoms are preferred. Examples of the s-valent aromatic hydrocarbon group include groups resulting from removing "s" hydrogen atoms each from the structural formulae of the aromatic rings.

The hydrocarbon groups may each have one or more of various substituents excluding hydroxy. Non-limiting examples of the substituents include halogen, oxo, substituted oxy (such as alkoxy, aryloxy, aralkyloxy, and acyloxy), carboxy, substituted oxycarbonyl (such as alkoxycarbonyl, aryloxycarbonyl, and aralkyloxycarbonyl), substituted or unsubstituted carbamoyl, cyano, nitro, substituted or unsubstituted amino, sulfo, and heterocyclic groups. The carboxy may be protected with a protecting group which is commonly used in the field of organic synthesis.

Non-limiting examples of a heterocyclic ring constituting the heterocyclic group include oxygen-containing heterocyclic rings, sulfur-containing heterocyclic rings, and nitrogen-containing heterocyclic rings, where oxygen, sulfur, and nitrogen are heteroatoms. Non-limiting examples of the oxygen-containing heterocyclic rings include 4-membered rings such as oxetane ring; 5-membered rings such as furan, tetrahydrofuran, oxazole, isoxazole, and γ-butyrolactone rings; 6-membered rings such as 4-oxo-4H-pyran, tetrahydropyran, and morpholine rings; fused rings such as hexahydrofuro[3,2-b]furan, benzofuran, isobenzofuran, 4-oxo-4H-chromene, chroman, and isochroman rings; and bridged rings such as 7-oxabicyclo[2.2.1]heptane, 3-oxatricyclo[4.3.1.$1^{4,8}$]undecan-2-one, and 3-oxatricyclo[4.2.1.$0^{4,8}$]nonan-2-one rings. Non-limiting examples of the sulfur-containing heterocyclic rings include 5-membered rings such as thiophene, thiazole, isothiazole, and thiadiazole rings; 6-membered rings such as 4-oxo-4H-thiopyran ring; and fused rings such as benzothiophene ring. Non-limiting examples of the nitrogen-containing heterocyclic rings include 5-membered rings such as pyrrole, pyrrolidine, pyrazole, imidazole, and triazole rings; 6-membered rings such as pyridine, pyridazine, pyrimidine, pyrazine, piperidine, and piperazine rings; and fused rings such as indole, indoline, quinoline, acridine, naphthyridine, quinazoline, and purine. The heterocyclic group may have one or more substituents. Non-limiting examples of the substituents include the substituents which the hydrocarbon group may have; as well as alkyl (including $C_1$-$C_4$ alkyl such as methyl and ethyl), cycloalkyl, and aryl (such as phenyl and naphthyl). Non-limiting examples of the s-valent heterocyclic group include groups resulting from removing "s" hydrogen atoms each from the structural formulae of the heterocyclic rings.

Non-limiting examples of the linkage group include carbonyl (-CO-), ether bond (-O-), thioether bond (-S-), ester bond (-COO-), amido bond (-CONH-), carbonate bond (-OCOO-), silyl bond (-Si-), and groups each including two or more of them linked to each other.

The number s represents an integer of 2 or more and is typically 2 to 20, and preferably 2 to 10.

Non-limiting examples of the hydroxy-free multifunctional vinyl ether compound include multifunctional vinyl ether compounds having an aliphatic skeleton, including divinyl ether compounds having an aliphatic skeleton, such as divinyl ether, ethylene glycol divinyl ether, diethylene glycol divinyl ether, triethylene glycol divinyl ether, tetraethylene glycol divinyl ether, polyethylene glycol divinyl ethers, propylene glycol divinyl ether, dipropylene glycol divinyl ether, tripropylene glycol divinyl ether, polypropylene glycol divinyl ethers, butanediol divinyl ethers, neopentyl glycol divinyl ether, hexanediol divinyl ethers, nonanediol divinyl ethers, trimethylolpropane divinyl ether, ethylene-oxide-added trimethylolpropane divinyl ether, pentaerythritol divinyl ether, and ethylene-oxide-added pentaerythritol divinyl ether; trivinyl ether compounds having an aliphatic skeleton, such as trimethylolpropane trivinyl ether and ethylene-oxide-added trimethylolpropane trivinyl ether; tetravinyl ether compounds having an aliphatic skeleton, such as pentaerythritol tetravinyl ether, ethylene-oxide-added pentaerythritol tetravinyl ether, and ditrimethylolpropane tetravinyl ether; and dipentaerythritol hexavinyl ether. Non-limiting examples of the hydroxy-free multifunctional vinyl ether compound also include multifunctional vinyl ether compounds having an alicyclic skeleton, such as 1,4-cyclohexanediol divinyl ether and 1,4-cyclohexanedimethanol divinyl ether; multifunctional vinyl ether compounds having an aromatic ring skeleton, such as hydroquinone divinyl ether; and multifunctional vinyl ether compounds having a cyclic ether skeleton, such as a compound represented by Formula (a-1-1) and a compound represented by Formula (a-1-2) below. The monomer composition may contain each of them alone or in combination.

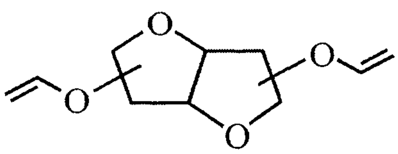

(a-1-1)

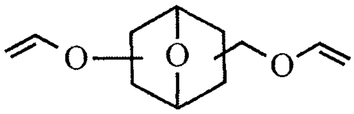

(a-1-2)

The vinyl ether compounds can be produced using any of known methods for producing vinyl ether compounds. For example, the compound represented by Formula (a-1-1) can be produced by reacting isosorbide and a vinyl ester compound (such as vinyl propionate) with each other in the presence of a transition metal compound.

As the hydroxy-free multifunctional vinyl ether compounds for use in the present invention, the monomer composition preferably contains at least one multifunctional vinyl ether compound selected from the group consisting of multifunctional vinyl ether compounds having a cyclic ether skeleton, multifunctional vinyl ether compounds having an aliphatic skeleton, and multifunctional vinyl ether compounds having an alicyclic skeleton. Non-limiting examples of the multifunctional vinyl ether compounds having a cyclic ether skeleton include multifunctional vinyl ether compounds of Formula (a-1) in which R is selected from an oxygen-containing heterocyclic group, which oxygen is a heteroatom, and a group including two or more of the heterocyclic groups bonded to each other through a single bond or a linkage group, of which divinyl ether compounds are typified. Non-limiting examples of the multifunctional vinyl ether compounds having an aliphatic skeleton include multifunctional vinyl ether compounds of Formula (a-1) in which R is selected from an aliphatic hydrocarbon group and a group including two or more aliphatic hydrocarbon groups bonded to each other through a single bond or a linkage group, of which divinyl ether compounds are typified. Non-limiting examples of the multifunctional vinyl ether compounds having an alicyclic skeleton include multifunctional vinyl ether compounds of Formula (a-1) in which R is selected from an alicyclic hydrocarbon group and a group including two or more alicyclic hydrocarbon groups bonded to each other through a single bond or a linkage group, of which divinyl ether compounds are typified. In particular, the monomer composition preferably contains at least one of a multifunctional vinyl ether compound having a cyclic ether skeleton and a multifunctional vinyl ether compound having an alicyclic skeleton. This is preferred for offering rapid curability. The at least one of the multifunctional vinyl ether compound having a cyclic ether skeleton and the multifunctional vinyl ether compound having an alicyclic skeleton may be present in a total content of preferably 50 weight percent or more, particularly preferably 60 weight percent or more, and most preferably 80 weight percent or more, of the total weight of all multifunctional vinyl ether compounds contained in the monomer composition according to the present invention. The upper limit of the total content is 100 weight percent.

The hydroxy-containing vinyl ether compound is a compound containing one or more vinyl ether groups and one or more hydroxy groups per molecule and is represented typically by Formula (a-2):

$$(HO)_t\text{-}R'\text{-}(O\text{-}CH{=}CH_2)_u \qquad \text{(a-2)}$$

where R' is selected from a "t + u"-valent hydrocarbon group, a "t + u"-valent heterocyclic group, and a "t + u"-valent group including two or more of these groups bonded to each other through a single bond or a linkage group; and t and u each represent, identically or differently, an integer of 1 or more.

The hydroxy-containing vinyl ether compound has the function of introducing a hydroxy group into a polymer derived from the monomer composition to terminate the propagation and can thereby restrain the polymer from having a higher molecular weight. The monomer composition according to the present invention contains the hydroxy-containing vinyl ether compound in an amount within the specific range and, when incorporated into a curable composition, allows the curable composition to have better curing sensitivity and to give a cured product having better substrate adhesion.

Examples of the "t + u"-valent hydrocarbon group, the "t + u"-valent heterocyclic group, and the "t + u"-valent group including two or more of them bonded to each other through a single bond or a linkage group are as with R in Formula (a-1).

The number t represents an integer of 1 or more and is typically 1 to 20, and preferably 1 to 10.

The number u represents an integer of 1 or more and is typically 1 to 20, and preferably 1 to 10.

Non-limiting examples of the hydroxy-containing vinyl ether compound include monovinyl ether compounds containing a hydroxy group and an aliphatic skeleton, such as 2-hydroxyethyl vinyl ether, 1-hydroxyethyl vinyl ether, 1-hydroxypropyl vinyl ether, 3-hydroxypropyl vinyl ether, 1-hydroxybutyl vinyl ether, 4-hydroxybutyl vinyl ether, 5-hydroxypentyl vinyl ether, 2-hydroxy-1-methylethyl vinyl ether, 4-hydroxyamyl vinyl ether, diethylene glycol monovinyl ether, and dipropylene glycol monovinyl ether; multifunctional vinyl ether compounds containing a hydroxy group and an aliphatic skeleton, such as pentaerythritol trivinyl ether and ethylene-oxide-added pentaerythritol trivinyl ether; and monovinyl ether compounds containing a hydroxy group and an alicyclic skeleton, such as 4-hydroxycyclohexyl vinyl ether, 6-hydroxyhexyl vinyl ether, 4-(hydroxymethyl)cyclohexyl vinyl ether, 2-hydroxycycloheptyl vinyl ether, 4-hydroxycyclooctyl vinyl ether, 2-hydroxycyclodecyl vinyl ether, 3-hydroxy-1-vinyloxyadamantane, bicyclo[2.2.1]heptanediol monovinyl ether, tricyclo[5.2.1.0$^{2,6}$]decanediol monovinyl ether, decahydronaphthalenediol monovinyl ether, and cyclohexanedimethanol monovinyl ether. The monomer composition may contain each of them alone or in combination.

Oxetane Compound (B)

The monomer composition according to the present invention comprises an oxetane compound (B) and/or an epoxy compound (C). Preferably one or more oxetane compounds, which are monomers are present. This is preferred because the monomer composition can have better adhesion to a variety of substrates and can impart toughness to the resulting cured product. The oxetane compounds are cationically polymerizable monomers containing an oxetanyl group as a polymerizable group. The oxetane compounds include monofunctional oxetane compounds and multifunctional oxetane compounds. The monomer composition may contain each of different oxetane compounds alone or in combination.

The oxetane compounds are represented typically by Formula (b):

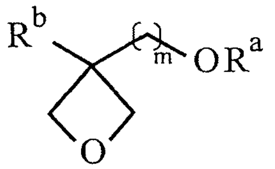

(b)

where $R^a$ represents a monovalent organic group; $R^b$ is selected from hydrogen and ethyl; and m represents an integer of 0 or more.

Non-limiting examples of the monovalent organic group as $R^a$ include monovalent hydrocarbon groups, monovalent heterocyclic groups, substituted oxycarbonyl (such as alkoxycarbonyl, aryloxycarbonyl, aralkyloxycarbonyl, and cycloalkyloxycarbonyl), substituted carbamoyl (such as N-alkylcarbamoyl and N-arylcarbamoyl), acyl (including aliphatic acyl such as acetyl; and aromatic acyl such as benzoyl), and monovalent groups each including two or more of these groups bonded to each other through a single bond or a linkage group.

The monovalent hydrocarbon groups include monovalent aliphatic hydrocarbon groups, monovalent alicyclic hydrocarbon groups, and monovalent aromatic hydrocarbon groups.

Examples of the monovalent aliphatic hydrocarbon groups, monovalent alicyclic hydrocarbon groups, monovalent aromatic hydrocarbon groups, and monovalent heterocyclic groups include monovalent groups corresponding to the s-valent groups as R in Formula (a-1). Examples of the linkage group are as with R in Formula (a-1).

The monovalent organic group may have one or more substituents. Examples of the substituents are as with the substituents which R in Formula (a-1) may have.

The number m represents an integer of 0 or more and is typically 0 to 20, and preferably 0 or 1.

Non-limiting examples of the compounds represented by Formula (b) include 3-methoxyoxetane, 3-ethoxyoxetane, 3-propoxyoxetane, 3-isopropoxyoxetane, 3-(n-butoxy)oxetane, 3-isobutoxyoxetane, 3-(s-butoxy)oxetane, 3-(t-butoxy)oxetane, 3-pentyloxyoxetane, 3-hexyloxyoxetane, 3-heptyloxyoxetane, 3-octyloxyoxetane, 3-(1-propenyloxy)oxetane, 3-cyclohexyloxyoxetane, 3-(4-methylcyclohexyloxy)oxetane, 3-[(2-perfluorobutyl)ethoxy]oxetane, 3-phenoxyoxetane, 3-(4-methylphenoxy)oxetane, 3-(3-chloro-1-propoxy)oxetane, 3-(3-bromo-1-propoxy)oxetane, 3-(4-fluorophenoxy)oxetane, and compounds represented by Formulae (b-1) to (b-15):

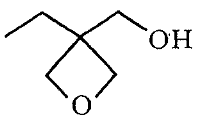

(b-1)

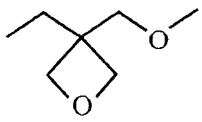

(b-2)

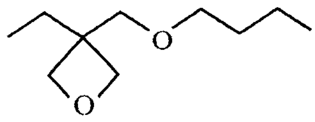

(b-3)

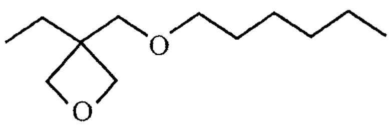

(b-4)

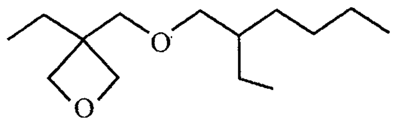

(b-5)

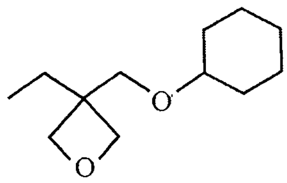

(b-6)

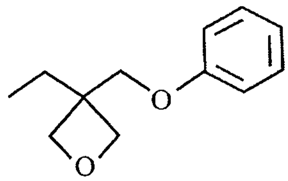

(b-7)

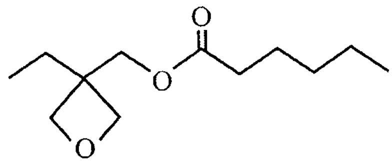

(b-8)

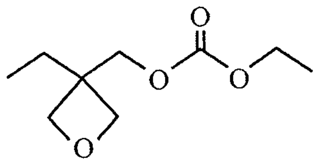

(b-9)

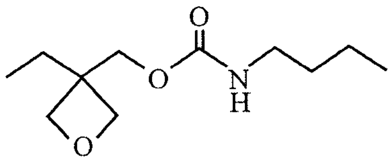

(b-10)

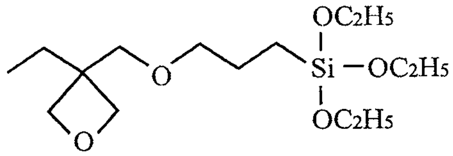

(b-11)

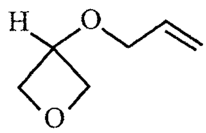

(b-12)

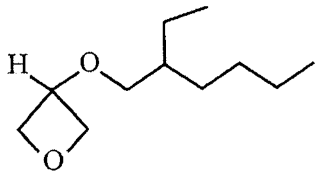

(b-13)

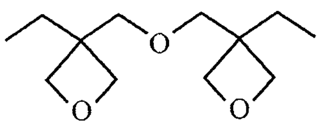

(b-14)

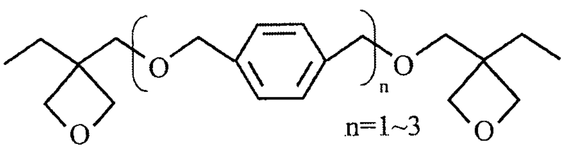

n=1~3

(b-15)

Such oxetane compounds for use herein may be selected from commercial products available typically as ARON OXETANE OXT-101, ARON OXETANE OXT-121, ARON OXETANE OXT-212, ARON OXETANE OXT-211, ARON OXETANE OXT-213, ARON OXETANE OXT-221, and ARON OXETANE OXT-610 (each from Toagosei Co., Ltd.).

Epoxy Compound (C)

The monomer composition according to the present invention comprises an oxetane compound (B) and/or an epoxy compound (C). Preferably one or more epoxy compounds, which are monomers are present. This is preferred for forming a cured product having excellent adhesion to a wide variety of substrates (namely, having selectivity to a wide variety of substrates). The epoxy compounds are cationically polymerizable monomers containing an epoxy group as a polymerizable group. The epoxy compounds include monofunctional epoxy compounds and multifunctional epoxy compounds. The monomer composition may contain each of different epoxy compounds alone or in combination.

Non-limiting examples of the epoxy compounds include aromatic glycidyl ether epoxy compounds; alicyclic glycidyl ether epoxy compounds (such as hydrogenated bisphenol-A diglycidyl ether); aliphatic glycidyl ether epoxy compounds; glycidyl ester epoxy compounds; glycidylamine epoxy compounds; epoxy compounds containing a cyclohexene oxide group (hereinafter also referred to as "cycloaliphatic epoxy compound(s)"); and epoxy-modified siloxane compounds.

The monomer composition according to the present invention preferably contains one or more of the cycloaliphatic epoxy compounds and may contain the cycloaliphatic epoxy compounds in an amount of preferably 30 weight percent or more, more preferably 50 weight percent or more, and particularly preferably 80 weight percent or more, of the total weight of all epoxy compounds contained in the monomer composition. This is preferred because the monomer composition can form a cured product having excellent substrate adhesion and, when used in an inkjet ink, can give a beautiful print that resists scratching and separation and can be maintained over a long time.

Non-limiting examples of the cycloaliphatic epoxy compounds include compounds represented by Formula (c):

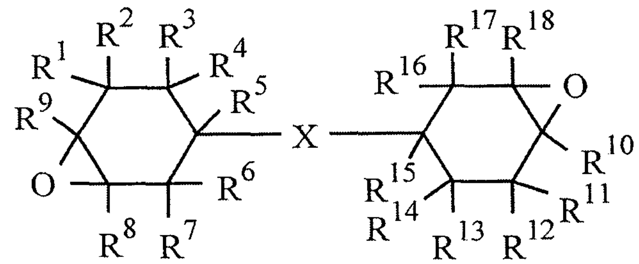

(c)

In Formula (c), $R^1$ to $R^{18}$ are each, identically or differently, selected from hydrogen, halogen, a hydrocarbon group optionally containing oxygen or halogen, and optionally substituted alkoxy.

Non-limiting examples of the halogen as $R^1$ to $R^{18}$ include fluorine, chlorine, bromine, and iodine.

Non-limiting examples of the hydrocarbon group as $R^1$ to $R^{18}$ include monovalent groups corresponding to the above-mentioned s-valent hydrocarbon groups as R in Formula (a-1).

Non-limiting examples of the hydrocarbon group optionally containing oxygen or halogen, as $R^1$ to $R^{18}$, include groups corresponding to the above-mentioned hydrocarbon groups, except with an oxygen-containing group or a halogen atom replacing at least one of hydrogen atoms each of the hydrocarbon groups. Non-limiting examples of the oxygen-containing group include hydroxy; hydroperoxy; $C_1$-$C_{10}$ alkoxy such as methoxy, ethoxy, propoxy, isopropyloxy, butoxy, and isobutyloxy; $C_2$-$C_{10}$ alkenyloxy such as allyloxy; tolyloxy, naphthyloxy, and other $C_6$-$C_{14}$ aryloxy which may have one or more substituents selected from $C_1$-$C_{10}$ alkyl, $C_2$-$C_{10}$ alkenyl, halogen, and $C_1$-$C_{10}$ alkoxy; $C_7$-$C_{18}$ aralkyloxy such as benzyloxy and phenethyloxy; $C_1$-$C_{10}$ acyloxy such as acetyloxy, propionyloxy, (meth)acryloyloxy, and benzoyloxy; $C_1$-$C_{10}$ alkoxycarbonyl such as methoxycarbonyl, ethoxycarbonyl, propoxycarbonyl, and butoxycarbonyl; phenoxycarbonyl, tolyloxycarbonyl, naphthyloxycarbonyl, and other $C_6$-$C_{14}$ aryloxycarbonyl which may have one or more substituents selected from $C_1$-$C_{10}$ alkyl, $C_2$-$C_{10}$ alkenyl, halogen, and $C_1$-$C_{10}$ alkoxy; $C_7$-$C_{18}$ aralkyloxycarbonyl such as benzyloxycarbonyl; epoxy-containing groups such as glycidyloxy; oxetanyl-containing groups such as ethyloxetanyloxy; $C_1$-$C_{10}$ acyl such as acetyl, propionyl, and benzoyl; isocyanato; sulfo; carbamoyl; oxo; and groups each including two or more of them bonded through a single bond or a linkage group such as $C_1$-$C_{10}$ alkylene.

Non-limiting examples of the alkoxy as $R^1$ to $R^{18}$ include $C_1$-$C_{10}$ alkoxy such as methoxy, ethoxy, propoxy, isopropyloxy, butoxy, and isobutyloxy.

Non-limiting examples of the substituents which the alkoxy may have include halogen, hydroxy, $C_1$-$C_{10}$ alkoxy, $C_2$-$C_{10}$ alkenyloxy, $C_6$-$C_{14}$ aryloxy, $C_1$-$C_{10}$ acyloxy, mercapto, $C_1$-$C_{10}$ alkylthio, $C_2$-$C_{10}$ alkenylthio, $C_6$-$C_{14}$ arylthio, $C_7$-$C_{18}$ aralkylthio, carboxy, $C_1$-$C_{10}$ alkoxycarbonyl, $C_6$-$C_{14}$ aryloxycarbonyl, $C_7$-$C_{18}$ aralkyloxycarbonyl, amino, mono- or di-($C_1$-$C_{10}$ alkyl) amino, $C_1$-$C_{10}$ acylamino, epoxy-containing groups, oxetanyl-containing groups, $C_1$-$C_{10}$ acyl, oxo, and groups each including two or more of them bonded through a single bond or a linkage group such as $C_1$-$C_{10}$ alkylene.

In Formula (c), X is selected from a single bond and a linkage group. Non-limiting examples of the linkage group include divalent hydrocarbon groups, alkenylene with part or all of carbon-carbon double bond(s) being epoxidized, carbonyl (-CO-), ether bond (-O-), ester bond (-COO-), carbonate (-O-CO-O-), amido (-CONH-), and groups each including two or more of them linked to each other.

Non-limiting examples of the divalent hydrocarbon groups include $C_1$-$C_{18}$ linear or branched alkylene and $C_3$-$C_{18}$ divalent alicyclic hydrocarbon groups. Non-limiting examples of the $C_1$-$C_{18}$ linear or branched alkylene include methylene, methylmethylene, dimethylmethylene, ethylene, propylene, and trimethylene. Non-limiting examples of the $C_3$-$C_{18}$ divalent alicyclic hydrocarbon groups include cycloalkylene (including cycloalkylidene), such as 1,2-cyclopentylene, 1,3-cyclopentylene, cyclopentylidene, 1,2-cyclohexylene, 1,3-cyclohexylene, 1,4-cyclohexylene, and cyclohexylidene.

The alkenylene with part or all of carbon-carbon double bond(s) being epoxidized is also referred to as "epoxidized alkenylene". Non-limiting examples of the alkylene moiety in the epoxidized alkenylene include $C_2$-$C_8$ linear or branched alkenylene such as vinylene, propenylene, 1-butenylene, 2-butenylene, butadienylene, pentenylene, hexenylene, heptenylene, and octenylene. In particular, the epoxidized alkenylene is preferably alkenylene with all of carbon-carbon double bond(s) being epoxidized and is more preferably $C_2$-$C_4$ alkenylene with all of carbon-carbon double bond(s) being epoxidized.

Representative, but non-limiting examples of the compounds represented by Formula (c) include (3,4,3',4'-diepoxy)bicyclohexyl, bis(3,4-epoxycyclohexylmethyl) ether, 1,2-epoxy-1,2-bis(3,4-epoxycyclohex-1-yl)ethane, 2,2-bis(3,4-epoxycyclohex-1-yl)propane, 1,2-bis(3,4-epoxycyclohex-1-yl)ethane, and compounds represented by Formulae (c-1) to (c-8) below. In Formulae (c-5) and (c-7), $n^1$ and $n^2$ each independently represent an integer of 1 to 30. In Formula (c-5), L represents $C_1$-$C_8$ linear or branched alkylene.

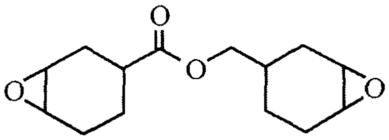
(c-1)

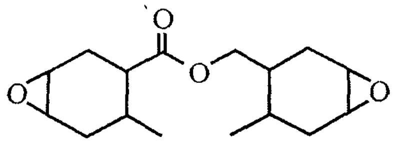
(c-2)

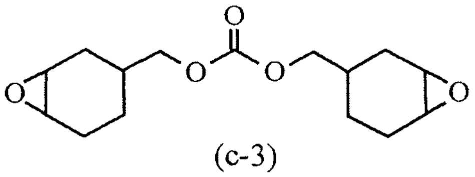
(c-3)

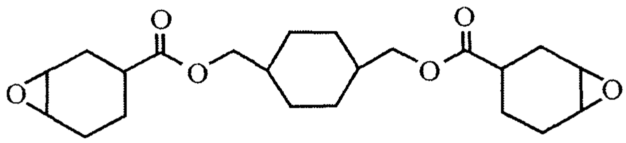
(c-4)

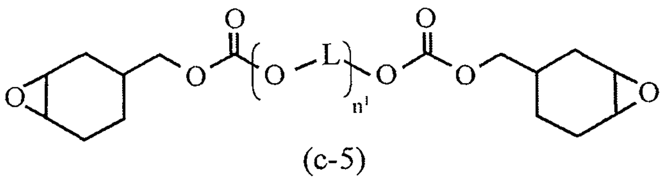
(c-5)

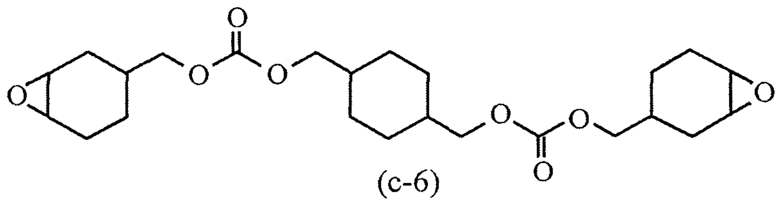
(c-6)

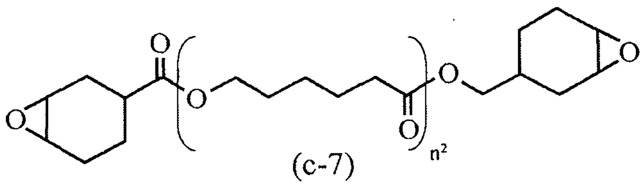
(c-7)

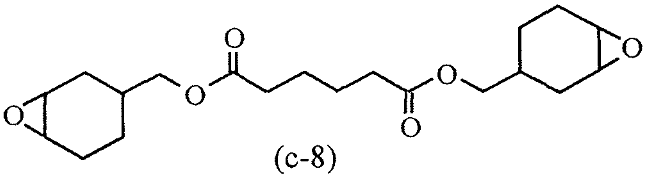
(c-8)

In addition to the compounds represented by Formula (c), examples of the cycloaliphatic epoxy compounds also include compounds each containing an alicyclic ring and two or more epoxy groups per molecule, where one of the two or more epoxy groups is a cyclohexene oxide group, as represented by Formula (c-9):

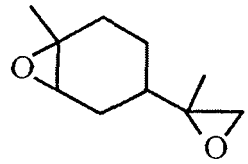

(c-9)

Examples of the cycloaliphatic epoxy compounds also include cycloaliphatic epoxy compounds each containing three or more cyclohexene oxide groups, as represented by Formulae (c-10) and (c-11) below; and cycloaliphatic epoxy compounds each containing one cyclohexene oxide group, but being devoid of other epoxy groups, as represented by Formula (c-12) to (c-15) below. In Formulae (c-10) and (c-11), $n^3$ to $n^8$ each represent, identically or differently, an integer of 1 to 30. In Formula (c-14), $R^{19}$ and $R^{20}$ each represent, identically or differently, $C_1$-$C_{31}$ linear or branched alkyl.

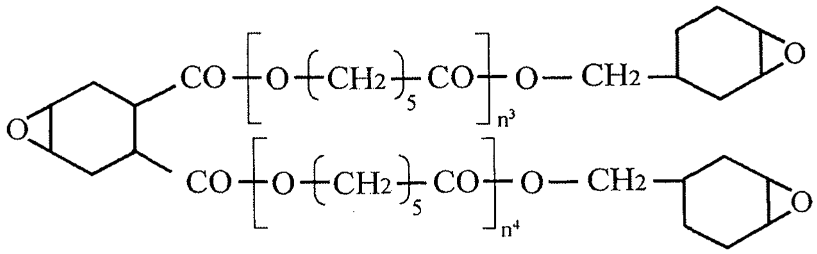

(c-10)

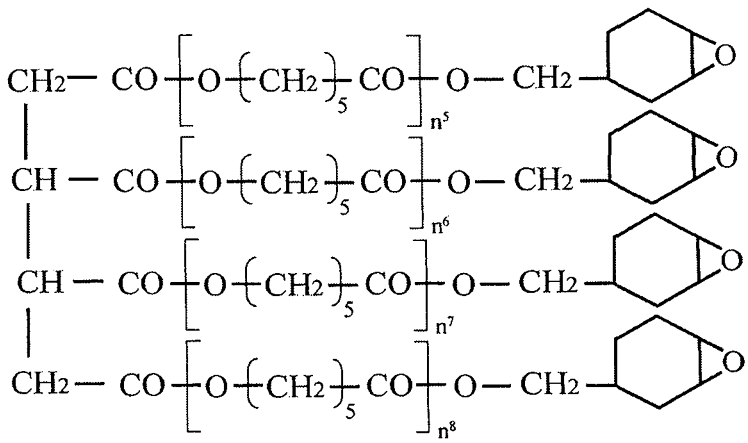

(c-11)

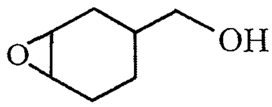

(c-12)

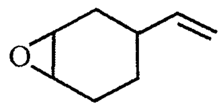

(c-13)

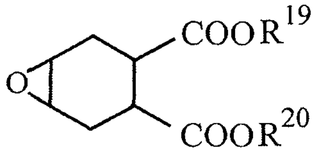

(c-14)

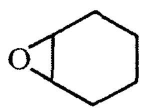

(c-15)

The monomer composition herein preferably contains, as an epoxy compound, any of the compounds represented by Formula (c) containing two cyclohexene oxide groups per molecule, and particularly preferably contains 3,4-epoxycyclohexylmethyl (3,4-epoxy)cyclohexanecarboxylate represented by Formula (c-1). This is preferred, in particular, for excellent adhesion to the substrate (such as glass) .

When desired to give a cured product having high surface hardness and good heat resistance, the monomer composition may contain an epoxy-modified siloxane compound, which is an epoxy compound.

Non-limiting examples of the epoxy-modified siloxane compound include epoxy-modified polyorganosilsesquioxanes and epoxy-modified silicones. The monomer composition may contain each of them alone or in combination.

Non-limiting examples of the epoxy-modified polyorganosilsesquioxanes include compounds including any of constitutional units represented by Formulae (c-16) and (c-17) below. Such compounds include compounds of any of random structures, cage-like structures, and ladder-like structures.

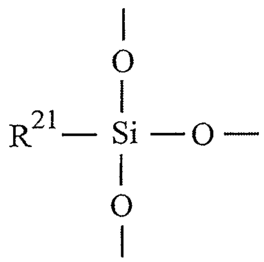

(c-16)

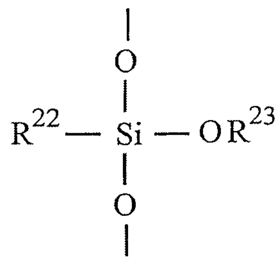

(c-17)

The epoxy-modified silicones include compounds having a cyclic structure, and compounds having a chain structure. The epoxy-modified silicones having a cyclic structure are represented typically by Formula (c-18); and the epoxy-modified silicones having a chain structure are represented typically by Formula (c-19):

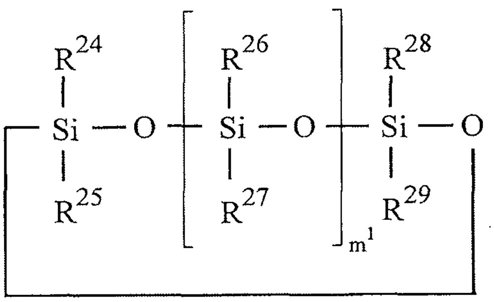

(c-18)

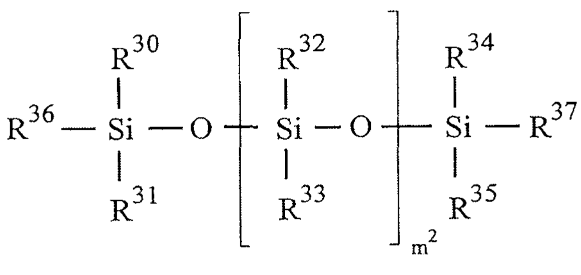

(c-19)

In the formulae, $R^{21}$ to $R^{37}$ are each, identically or differently, selected from hydrogen and a hydrocarbon group optionally containing an oxirane ring. Non-limiting examples of the hydrocarbon group include monovalent hydrocarbon groups corresponding to the s-valent hydrocarbon groups as R in Formula (a-1). The numbers $m^1$ in Formula (c-18) and $m^2$ in Formula (c-19) each represent, identically or differently, an integer of 1 or more. When $m^1$ is an integer of 2 or more, $m^1$ occurrences of $R^{26}$ and $m^1$ occurrences of $R^{27}$ in (c-18) may be identical or different. When $m^2$ is an integer of 2 or more, $m^2$ occurrences of $R^{32}$ and $m^2$ occurrences of $R^{33}$ in (c-19) may be identical or different. However, at least one of $R^{21}$ to $R^{23}$ in the polyorganosilsesquioxanes, at least one of $R^{24}$ to $R^{29}$ in the silicones having a cyclic structure, and at least one of $R^{30}$ to $R^{37}$ in the silicones having a chain structure are each independently an oxirane-ring-containing hydrocarbon group (such as a hydrocarbon group containing a cyclohexene oxide group, or a hydrocarbon group containing a glycidyl group).

The epoxy-modified siloxane compound may be present in a content of typically 1 to 100 weight percent of the total weight of all epoxy compounds contained in the monomer composition. The upper limit of the content is preferably 80 weight percent, particularly preferably 70 weight percent, and most preferably 60 weight percent. The lower limit of the content is preferably 5 weight percent, particularly preferably 10 weight percent, and most preferably 20 weight percent.

Other Monomers

The monomer composition according to the present invention may contain, as a monomer, one or more other monofunctional or multifunctional monomers than the vinyl ether compounds (A), the oxetane compounds (B), and the epoxy compounds (C). Non-limiting examples of the other monofunctional or multifunctional monomers include cationically polymerizable monomers such as oxolane compounds, cyclic acetal compounds, cyclic lactone compounds, thiirane compounds, thietane compounds, spiro ortho ester compounds, which are reaction products between an epoxy compound and a lactone, ethylenically unsaturated compounds (such as vinyl compounds), cyclic ether compounds, cyclic thioether compounds, and derivatives of them; and radically polymerizable monomers.

Monomer Composition

The monomer composition according to the present invention includes a monofunctional monomer or monomers and a multifunctional monomer or monomers and contains vinyl ether compounds (A) and an oxetane compound (B) and/or an epoxy compound (C). The term "monofunctional monomer" refers to a compound containing only one polymerizable group per molecule; and the term "multifunctional monomer" refers to a compound containing two or more polymerizable groups per molecule.

The monomer composition according to the present invention contains a monofunctional monomer (in particular, a monofunctional cationically polymerizable monomer) in an amount of 20 to 80 weight percent, preferably 35 to 65 weight percent, and particularly preferably 35 to 60 weight percent, of the total weight of the monomer composition (the total weight of all monomers contained in the monomer composition). The monomer composition according to the present invention having this configuration, when incorporated with a photoacid generator, gives a curable composition that less shrinks during the curing process and can yield a cured product having excellent substrate adhesion.

The vinyl ether compounds (A) may be present in a content of typically 10 to 80 weight percent, preferably 15 to 75 weight percent, particularly preferably 20 to 75 weight percent, and most preferably 25 to 70 weight percent, of the total weight of the monomer composition (the total weight of all monomers contained in the monomer composition). When two or more different compounds are present, the term "content" refers to the total content of them.

The hydroxy-free multifunctional vinyl ether compound is present in a content of 5 to 80 weight percent, preferably 10 to 75 weight percent, particularly preferably 15 to 70 weight percent, and most preferably 20 to 70 weight percent, of the total weight of the monomer composition (the total weight of all monomers contained in the monomer composition). When two or more different compounds are present, the term "content" refers to the total content of them. Since containing hydroxy-free multifunctional vinyl ether compound in a content within the range, the monomer composition according to the present invention, when incorporated with a photoacid generator, gives a curable composition that has excellent curing sensitivity and can offer rapid curability.

The hydroxy-containing vinyl ether compound is present in a content of 0.1 weight percent to less than 10 weight percent, preferably 0.5 to 8 weight percent, particularly preferably 1 to 8 weight percent, and most preferably 2 to 5 weight percent, of the total weight of the monomer composition (the total weight of all monomers contained in the monomer composition). When two or more different compounds are present, the term "content" refers to the total content of them. Since containing the hydroxy-containing vinyl ether compound in a content within the range, the monomer composition according to the present invention, when incorporated with a photoacid generator, gives a curable composition that has excellent curing sensitivity and can form a cured product having excellent substrate adhesion.

The monomer composition preferably has a content of a vinyl ether compound or compounds having a cyclic ether skeleton (such as the compound represented by Formula (a-1-1) and/or the compound represented by Formula (a-1-2)) of typically less than 30 weight percent, particularly preferably 5 to 25 weight percent, and most preferably 10 to 25 weight percent, of the total weight of the monomer composition (the total weight of all monomers contained in the monomer composition). When the monomer composition contains two or more different compounds, the term "content" refers to the total content of them. The monomer composition, when containing the vinyl ether compound or compounds having a cyclic ether skeleton in a content greater than the range, tends to less resist cure inhibition by water.

The monomer composition according to the present invention may contain one or more other vinyl ether compounds than the hydroxy-free multifunctional vinyl ether compounds and the hydroxy-containing vinyl ether compounds. However, the monomer composition preferably has a content of such other vinyl ether compounds of typically 30 weight

percent or less, more preferably 25 weight percent or less, particularly preferably 20 weight percent or less, and most preferably 10 weight percent or less, of the total weight of the monomer composition according to the present invention.

The monomer composition according to the present invention comprises an oxetane compound (B) and/or an epoxy compound (C). The monomer composition may contain the oxetane compound (B) in a content of typically at least weight percent, preferably 10 to 70 weight percent, particularly preferably 20 to 60 weight percent, and most preferably 30 to 50 weight percent, of the total weight of the monomer composition (the total weight of all monomers contained in the monomer composition). The monomer composition, when containing the oxetane compound (B) in a content within the range and when incorporated with a photoacid generator, gives a curable composition that resists cure inhibition by water and can still offer rapid curability.

The monomer composition according to the present invention comprises an oxetane compound (B) and/or an epoxy compound (C). The monomer composition may contain the epoxy compound (C) in a content of typically at least weight percent, preferably 10 to 60 weight percent, particularly preferably 10 to 40 weight percent, and most preferably 20 to 25 weight percent, of the total weight of the monomer composition (the total weight of all monomers contained in the monomer composition). The monomer composition, when containing the epoxy compound (C) in a content within the range and when incorporated with a photoacid generator, gives a curable composition that yields a cured product having excellent substrate adhesion.

The monomer composition according to the present invention may contain one or more other monomers than the above-mentioned compounds. However, the monomer composition has a content of such other monomers of typically 30 weight percent or less, and preferably 20 weight percent or less, of the total weight of the monomer composition (the total weight of all monomers contained in the monomer composition).

The monomer composition according to the present invention can be produced by uniformly mixing the vinyl ether compounds (A), and, as needed, one or more other monomers (including cationically polymerizable monomers such as the oxetane compounds (B) and the epoxy compounds (C)) using a generally known mixing device. Non-limiting examples of the mixing device include planetary centrifugal mixers (rotation/revolution mixing and deaeration machines), homogenizers, planetary mixers, triple roll mills, and bead mills. The components may be mixed at once or in succession.

Curable Composition

The curable composition according to the present invention contains the monomer composition and a photoacid generator.

Photoacid Generator

The photoacid generator is a compound that generates an acid upon light irradiation and is also called a "cationic photoinitiator". The photoacid generator includes a cationic moiety and an anionic moiety. The cationic moiety absorbs light. The anionic moiety acts as an acid source. Non-limiting examples of the photoacid generator include diazonium salt compounds, iodonium salt compounds, sulfonium salt compounds, phosphonium salt compounds, selenium salt compounds, oxonium salt compounds, ammonium salt compounds, bromine salt compounds, metallocene complexes, and iron-arene complexes. The curable composition may contain each of them alone or in combination.

Non-limiting examples of cationic moieties of the sulfonium salt compounds include arylsulfonium ions such as (4-hydroxyphenyl)methylbenzylsulfonium ion, triphenylsulfonium ion, diphenyl[4-(phenylthio)phenyl]sulfonium ion, and tri-p-tolylsulfonium ion, of which triarylsulfonium ions are typified.

Non-limiting examples of the anionic moiety of the photoacid generator include $BF_4^-$, $CF_3SO_3^-$, $CH_3C_6H_4SO_3^-$, $CH_3(NO_2)C_6H_4SO_3^-$, $B(C_6F_5)_4^-$, $PF_6^-$, $[(Rf)_kPF_{6-k}]^-$ (where Rf represents, independently in each occurrence, alkyl except with fluorine atoms replacing 80% or more of hydrogen atoms of the alkyl; and k represents an integer of 1 to 5), $AsF_6^-$, $SbF_6^-$, $SbF_5OH^-$, halogenic anions, sulfonate anions, carboxylate anions, and sulfate anions.

Non-limiting examples of the photoacid generator for use in the present invention include compounds represented by the formulae:

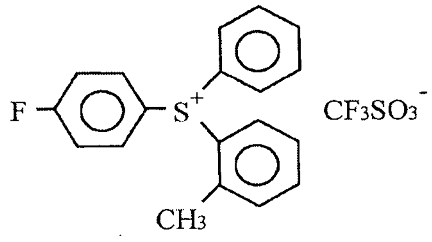

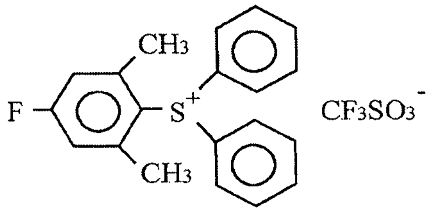

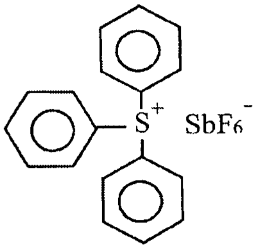
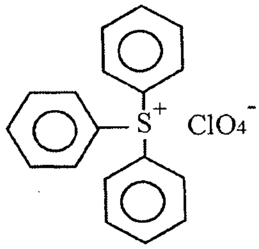
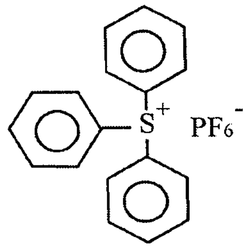

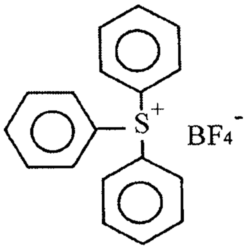
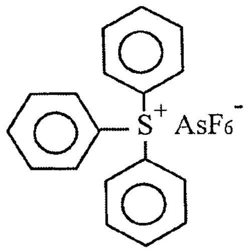
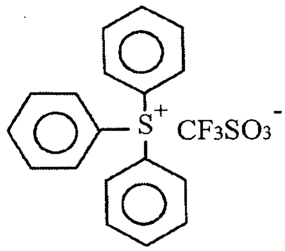

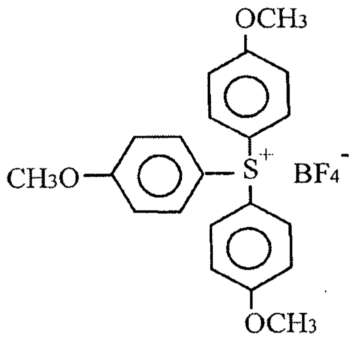
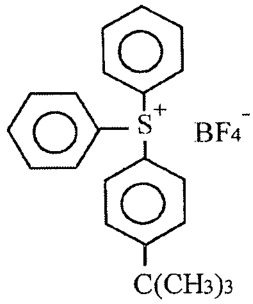

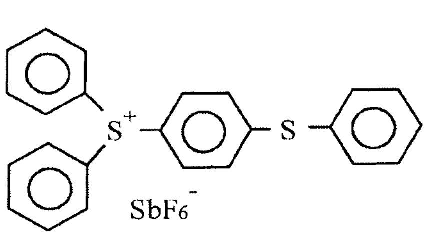
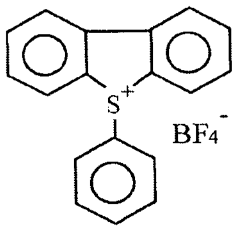
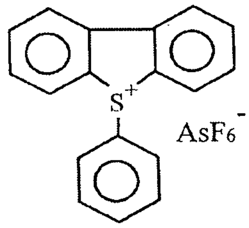

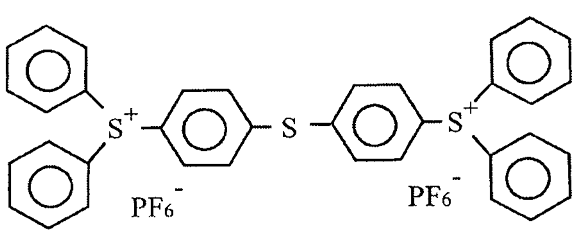
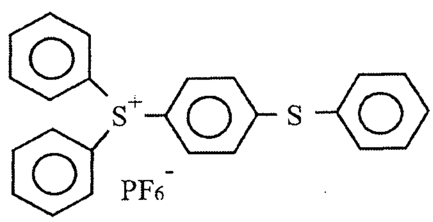

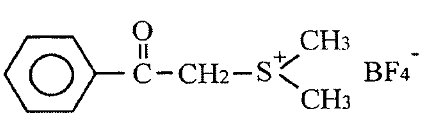
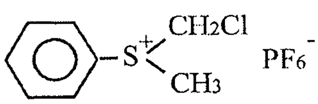

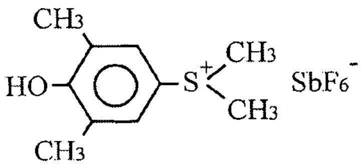

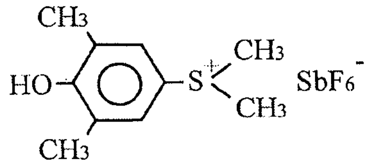

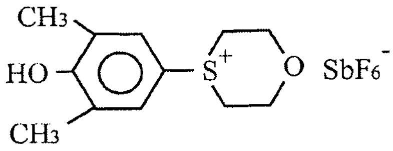

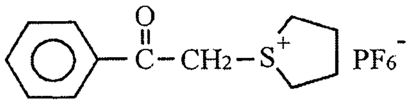

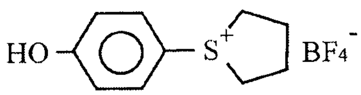

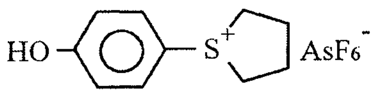

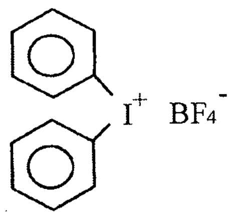

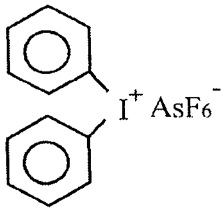

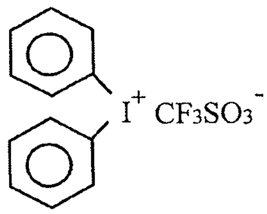

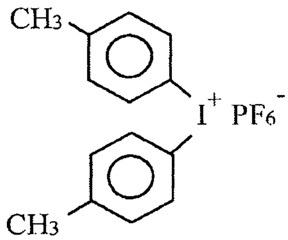

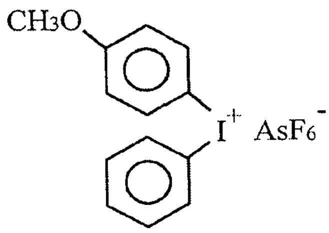

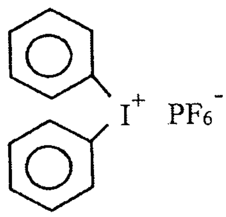

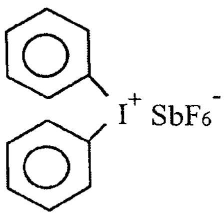

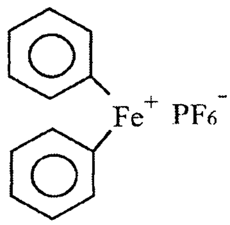

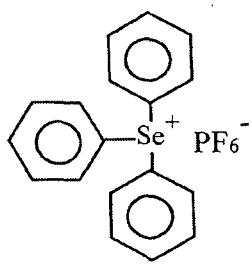

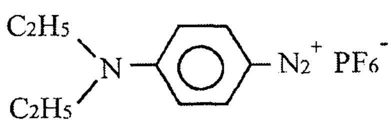

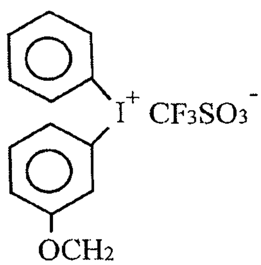

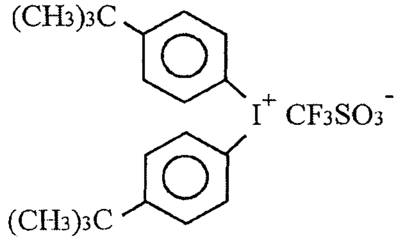

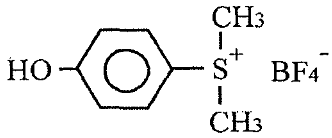

The photoacid generator for use in the present invention may be selected from commercial products available typically under the trade names of: CYRACURE UVI-6970, CYRACURE UVI-6974, CYRACURE UVI-6990, and CYRACURE UVI-950 (each from Union Carbide Corporation, U.S.A.); IRGACURE 250, IRGACURE 261, IRGACURE 264, IRGACURE 270, and IRGACURE 290 (each from BASF SE); CG-24-61 (from Ciba Geigy Ltd.); ADEKA OPTOMER SP-150, ADEKA OPTOMER SP-151, ADEKA OPTOMER SP-170, and ADEKA OPTOMER SP-171 (each from ADEKA CORPORATION); DAICAT II (from Daicel Corporation); UVAC 1590 and UVAC 1591 (each from DAICEL-CYTEC Company, Ltd.); CI-2064, CI-2639, CI-2624, CI-2481, CI-2734, CI-2855, CI-2823, CI-2758, and CIT-1682 (each from Nippon Soda Co., Ltd.); PI-2074 (from Rhodia, toluylcumyliodonium tetrakis(pentafluorophenyl)borate); FFC509 (from 3M Company); BBI-102, BBI-101, BBI-103, MPI-103, BDS-105, TPS-103, MDS-103, MDS-105, MDS-203, MDS-205, DTS-102, DTS-103, NAT-103, NDS-103, BMS-105, and TMS-105 (each from Midori Kagaku Co., Ltd.); CD-1010, CD-1011, and CD-1012 (each from Sartomer Company, Inc., U.S.A.); CPI-100P, CPI-101A, CPI-110P, CPI-110A, and CPI-210S (each from San-Apro Ltd.); and UVI-6992 and UVI-6976 (each from The Dow Chemical Company).

The monomer composition in the curable composition according to the present invention may be present in a content of typically 50 to 99.9 weight percent, and preferably 70 to 99.5 weight percent, of the total weight (100 weight percent) of the curable composition.

The photoacid generator in the curable composition according to the present invention may be present in a proportion of typically 0.1 to 20 parts by weight, and preferably 0.5 to 10 parts by weight, per 100 parts by weight of the monomer composition.

The curable composition according to the present invention is preferably a solvent-free system, namely, is preferably approximately devoid of solvents. This is preferred because the curable composition can have better drying behavior, can be applied even to a substrate being susceptible to deterioration by solvents, and less suffers from odors generated due to volatilization of solvents. The curable composition may have a solvent content of 10 weight percent or less, preferably 5 weight percent or less, and particularly preferably 1 weight percent or less, of the total weight (100 weight percent) of the curable composition.

The curable composition according to the present invention may further contain one or more other components as needed, in addition to the monomer composition and the photoacid generator. Non-limiting examples of such other components include known or common sensitizers (such as acridine compounds, benzoflavins, perylenes, anthracenes, thioxanthone compounds, and laser dyes), sensitizing auxiliaries, antioxidants, and stabilizers (such as amines). In particular, assume that the curable composition according to the present invention is to be used in applications where the curable composition is cured by irradiation with light from a UV-LED. In this case, the curable composition preferably contains a sensitizer alone or, as needed, in combination with a sensitizing auxiliary. This is preferred for better ultraviolet absorptivity of the photoacid generator and for better curability of the curable composition. These components may be present in a content of typically 0.05 to 10 weight percent, and preferably 0.1 to 5 weight percent, of the total weight (100 weight percent) of the curable composition. When two or more different substances belonging to these components are present, the term "content" refers to the total content of them.

The curable composition according to the present invention can be rapidly cured upon ultraviolet irradiation even in the presence of oxygen and/or water, to form a cured product. Thus, the curable composition, when used in a UV-curable inkjet ink, allows the ink to resist bleeding, to less cause odors, and to form an ink layer having excellent print quality.

A light source for the ultraviolet ray is not limited, as long as being capable of applying light to the curable composition to generate an acid in the curable composition. The light source for use herein may be selected typically from UV-LEDs, mercury lamps such as low-, medium-, or highpressure mercury lamps, mercury xenon lamps, metal halide lamps, tungsten lamps, arc lamps, excimer lamps, excimer laser, semiconductor laser, YAG laser, laser systems using laser in combination with a nonlinear optical crystal, and high-frequency induction ultraviolet generators. The quantity (integrated irradiance) of ultraviolet rays to be irradiated is typically 10 to 1000 $mJ/cm^2$.

After ultraviolet irradiation, the curable composition according to the present invention may further be subjected to a heat treatment. The curable composition, when subjected to a heat treatment, can be cured with a still higher degree of cure. The heat treatment may be performed at a heating temperature of 40°C to 200°C for a heating time of 1 minute to 15 hours. Such a higher degree of cure can also be obtained by leaving the curable composition after ultraviolet

irradiation left stand at room temperature (20°C) for 1 to 48 hours.

The curable composition according to the present invention can form a cured product having excellent adhesion to a wide variety of substrates. Non-limiting examples of the substrates include glass; metals such as aluminum foil and copper foil; plastics such as polyethylenes, polypropylenes, poly(ethylene terephthalate)s (PETs), vinyl chloride resins, and polycarbonates; natural rubber; isobutylene-isoprene rubber; foams typically of polyurethanes and polychloroprene rubber; wood; woven fabrics; nonwoven fabrics; cloth; paper such as woodfree paper, glassine paper, kraft paper, and Japanese paper; silicon wafers; ceramics; and composites of them.

The curable composition according to the present invention has the characteristic properties and is therefore advantageously usable typically as or for UV-curable inkjet ink materials, coating materials, adhesives, encapsulants, civil engineering and construction materials, laminates and other electric/electronic components, photoresists, solder masks (solder resists), interlayer components for multilayer printed circuit boards, insulating materials, repairing materials for concrete buildings, casting materials, sealants, stereolithographic materials, and optical materials for optical components such as lenses and optical waveguides.

In particular, the curable composition according to the present invention is preferably used as UV-curable inkjet ink materials (such as a UV-curable inkjet transparent ink). Such a UV-curable inkjet transparent ink including the curable composition according to the present invention, when incorporated with at least one selected from pigments and dyes, can form a variety of pigment/dye inks (pigment inks, dye inks, and inks each containing both a pigment and a dye). The curable composition is also usable as or for priming inks and varnishing inks. The priming inks and varnishing inks are inks which are to be applied before and/or after the application of a pigment/dye ink, allows the pigment/dye ink to be more readily fixed to the substrate surface to form an ink layer with bright coloration and high image quality, and contributes to elimination or minimization of ink strike-through and to better weatherability and better water resistance.

UV-Curable Inkjet Ink

The UV-curable inkjet ink (in particular, the pigment/dye ink) according to the present invention contains the curable composition and at least one selected from pigments and dyes. The curable composition herein acts as a UV-curable inkjet transparent ink.

Pigments

The pigments for use herein can be selected, without limitation, from coloring materials that are generally known as pigments and are dispersible in the curable composition. The pigments preferably have an average particle diameter of 300 nm or less. This is preferred because the resulting ink is dischargeable excellently, can be jetted (can fly) satisfactorily, and offers excellent print reproducibility. The ink may contain each of different pigments alone or in combination.

The pigments may be selected from those having any of other properties such as magnetism, fluorescence, electroconductivity, and dielectricity, in addition to color developing and coloring abilities. In this case, the pigments can impart various functions to images.

Non-limiting examples of pigments usable herein include inorganic pigments, organic pigments, and fluorescent pigments. Non-limiting examples of the inorganic pigments include earthen pigments such as ocher and amber; lapis lazuli; azurite; chalk; white wash; white lead; vermilion; ultramarine; viridian; cadmium red; carbonaceous pigments such as carbon black, carbon refined, and carbon nanotubes; metal oxide pigments such as iron black, cobalt blue, zinc oxide, titanium oxide, chromium oxide, and iron oxides; metal sulfide pigments such as zinc sulfide; metal sulfates; metal carbonate such as calcium carbonate and magnesium carbonate; metal silicates; metal phosphates; and metal powders such as aluminum powder, bronze powder, and zinc powder. Non-limiting examples of the organic pigments include insoluble azo pigments such as monoazo yellow, monoazo red, monoazo violet, disazo yellow, disazo orange, and pyrazolone pigments; soluble azo pigments such as azo yellow lake and azo lake red; benzimidazolone pigments; β-naphthol pigments; naphthol AS pigment; condensed azo pigments; quinacridone pigments such as quinacridone red and quinacridone magenta; perylene pigments such as perylene red and perylene scarlet; perinone pigments such as perinone orange; isoindolinone pigments such as isoindolinone yellow and isoindolinone orange; isoindoline pigments such as isoindoline yellow; dioxazine pigments such as dioxazine violet; thioindigo pigments; anthraquinone pigments; quinophthalone pigments such as quinophthalone yellow; metal complex pigments; diketopyrrolopyrrole pigments; phthalocyanine pigments such as phthalocyanine blue and phthalocyanine green; and dye lake pigments. Non-limiting examples of the fluorescent pigments include inorganic fluorophors and organic fluorophors.

Dyes

Non-limiting examples of the dyes include nitroaniline, phenyl monoazo, pyridone azo, quinophthalone, styryl, anthraquinone, naphthalimide azo, benzothiazolylazo, phenyl disazo, and thiazolylazo dyes.

The UV-curable inkjet ink according to the present invention may contain the at least one selected from pigments and dyes (pigment and/or dye) in a proportion of typically 0.5 to 20 parts by weight, and preferably 1 to 10 parts by weight, per 100 parts by weight of the curable composition. When the ink contains two or more different substances belonging to these components, the term "proportion" refers to the total proportion of them.
The UV-curable inkjet ink according to the present invention may further contain a dispersant for better dispersibility of the pigment and/or dye. Non-limiting examples of the dispersant include nonionic surfactants, ionic surfactants, charging agents, and polymeric dispersants (such as products available under the trade names of Solsperse 24000 and Solsperse 32000, from Avecia Ltd.). The ink may contain each of them alone or in combination.
The dispersant may be present in a proportion of typically 1 to 50 parts by weight, and preferably 3 to 30 parts by weight, per 100 parts by weight of the pigment and/or dye.
The UV-curable inkjet ink according to the present invention, as containing the curable composition, can form an ink layer with extremely high definition in an air atmosphere at high speed, where the ink layer can be formed without limitations on humidity conditions and substrates (articles to be printed), while less causing odors. Examples
The present invention will be illustrated in further detail with reference to several examples below. It should be noted, however, that the examples are by no means intended to limit the scope of the present invention.

Example 1

Materials, i.e., 22 parts by weight of ISB-DVE, 3 parts by weight of DEGV, 50 parts by weight of OXT-212, 25 parts by weight of CELLOXIDE 2021P, and 5 parts by weight of a photoacid generator were mixed and yielded a curable composition (1). This had a surface tension (at 25°C and 1 atmospheric pressure) of 21.7 mN/m and a viscosity (at 25°C and a shear rate of 10 (1/s)) of 13 mPa·s.

Curability Evaluation

The prepared curable composition (1) was applied to a glass plate to form a coating having a thickness of 5 μm, and irradiated with ultraviolet rays using a mercury-xenon lamp (trade name LC8 LIGHTNINGCURE L9588, supplied by Hamamatsu Photonics K.K.) as a light source. An integrated irradiance (in $mJ/cm^2$) until the coating became tack-free was measured, on the basis of which the curability was evaluated. Specifically, an integrated irradiance until the coating became tack-free or the coating remained without separation from the glass plate upon rubbing of the coating surface with a ply of Kimwipes (registered trademark) was measured. The integrated irradiance is an integrated irradiance necessary for curing of such a curable composition approximately devoid of water (water-free curable composition).

Curability Evaluation in the Presence of Water

The curable composition (1) (100 parts by weight) was combined with and stirred with water (5 parts by weight) and yielded a water-containing curable composition (1).
An integrated irradiance (in $mJ/cm^2$) until the resulting coating became tack-free was measured by a procedure similar to the procedure in the above-mentioned curability evaluation, except for using the water-containing curable composition (1) instead of the curable composition (1). The rate of increase in integrated irradiance caused by water addition was calculated according to an expression below, to evaluate curability in the presence of water according to criteria as follows.

Rate of increase (%) in integrated irradiance = {((Integrated irradiance necessary for curing of water-containing curable composition)/(Integrated irradiance necessary for curing of water-free curable composition)) - 1} × 100

Evaluation criteria for curability in the presence of water:

Poor curability (Poor): rate of increase in integrated irradiance of 20% or more;

Good curability (Good): rate of increase in integrated irradiance of from 10% to less than 20%; and
Very good curability (VG): rate of increase in integrated irradiance of less than 10%.

Substrate Adhesion Evaluation

The curable composition (1) was applied to a substrate (glass plate or PET plate) to form a coating having a thickness of 5 μm, irradiated with ultraviolet rays using a mercury-xenon lamp as a light source until the coating became tack-free, and yielded a laminate of the coating and the glass plate, and a laminate of the coating and the PET plate.
Each eleven (11) slits were made on the coating surface of each of the laminates lengthwise and crosswise at 1-mm intervals in a grid manner and yielded samples each having hundred 1-mm square crosscuts. A cellophane adhesive tape (trade name Cellotape (registered trademark), supplied by Nichiban Co., Ltd., 24 mm wide) was laminated onto the crosscuts by one reciprocating movement of a 2-kg roller, and then removed by quickly pulling the tape in a direction perpendicular to the substrate at an ambient temperature of 20°C. The adhesion was evaluated on the basis of the number of crosscuts remained without separation according to the following criteria (in conformity with JIS K-5400:1990).
Substrate Adhesion Evaluation Criteria:

Very good substrate adhesion (VG): 0 to 15 crosscuts were separated from the substrate;
Good substrate adhesion (Good): 16 to 30 crosscuts were separated from the substrate; and
Poor substrate adhesion (Poor): 31 to 100 crosscuts were separated from the substrate.

Examples 2 to 12 and Comparative Examples 1 and 2

Procedures similar to that in Example 1 were performed, except for employing formulations of monomer compositions (in part by weight) as given in the following tables. Results are collectively presented in the tables.

[Table 1]

TABLE 1

| | Curable composition | | | | | Curability (integrated irradiance in $mJ/cm^2$) | | Curability in the presence of water | Substrate adhesion | |
|---|---|---|---|---|---|---|---|---|---|---|
| | Monomer composition | | | Monofunctional monomer (weight percent) | Photoacid generator (part by weight) | | | | | |
| | Vinyl ether compound (part by weight) | Oxetane compound (part by weight) | Epoxy compound (part by weight) | | | Water-free composition | Composition containing 5% water | | Glass plate | PET plate |
| Example 1 | ISB-DVE (22) DEGV (3) | OXT-212 (50) | CELLOXIDE 2021P (25) | 53 | 5 | 350 | 375 | VG | VG | VG |
| Example 2 | ONB-DVE (22) DEGV (3) | OXT-212 (50) | CELLOXIDE 2021P (25) | 53 | 5 | 300 | 300 | VG | VG | VG |
| Example 3 | 4CH-DVE (28) DEGV (2) | ALOX (50) | CELLOXIDE 2021P (20) | 52 | 5 | 300 | 300 | VG | VG | VG |
| Example 4 | ISB-DVE (25) CHVE (22) DEGV (3) | OXT-212 (30) | E-PS (20) | 75 | 5 | 400 | 425 | VG | VG | VG |
| Example 5 | ISB-DVE (23) 4CH-DVE (25) DEGV (2) | OXT-212 (50) | - | 52 | 5 | 250 | 250 | VG | VG | VG |
| Example 6 | ISB-DVE (25) 4CH-DVE (40) DEGV (5) | OXT-212 (30) | - | 35 | 5 | 200 | 200 | VG | VG | VG |
| Example 7 | ONB-DVE (25) 4CH-DVE (40) DEGV (5) | OXT-212 (30) | - | 35 | 5 | 150 | 150 | VG | VG | VG |
| Example 8 | ONB-DVE (25) 4CH-DVE (23) DEGV (2) | OXT-212 (30) OXT-221 (20) | - | 32 | 5 | 300 | 350 | Good | VG | VG |

(continued)

| | Curable composition | | | | | Curability (integrated irradiance in $mJ/cm^2$) | | Curability in the presence of water | Substrate adhesion | |
|---|---|---|---|---|---|---|---|---|---|---|
| | Monomer composition | | | Monofunctional monomer (weight percent) | Photoacid generator (part by weight) | | | | | |
| | Vinyl ether compound (part by weight) | Oxetane compound (part by weight) | Epoxy compound (part by weight) | | | Water-free composition | Composition containing 5% water | | Glass plate | PET plate |
| Example 9 | ISB-DVE (25) 4CH-DVE (23) DEGV (2) | OXT-212 (45) OXT-121 (5) | | 47 | 5 | 250 | 250 | VG | VG | VG |
| Example 10 | 4CH-DVE (25) TEGDVE (23) DEGV (2) | OXT-212 (35) OXT-121 (15) | - | 37 | 5 | 300 | 300 | VG | VG | VG |
| Comp. Ex. 1 | ISB-DVE (15) DEGV (10) | OXT-212 (50) | CELLOXIDE 2021P (25) | 60 | 5 | 600 | >1000 | Poor | Good | VG |
| Comp. Ex. 2 | ONB-DVE (25) 4CH-DVE (35) DEGV (10) | OXT-212 (30) | - | 40 | 5 | 400 | >1000 | Poor | Good | VG |

[Table 2]

TABLE 2

| | Curable composition | | | | | Curability (integrated irradiance in $mJ/cm^2$) | | Curability in the presence of water | Substrate adhesion | |
|---|---|---|---|---|---|---|---|---|---|---|
| | Monomer composition | | | Monofunctional monomer (weight percent) | Photoacid generator (part by weight) | | | | | |
| | Vinyl ether compound (part by weight) | Oxetane compound (part by weight) | Epoxy compound (part by weight) | | | Water-free composition | Composition containing 5% water | | Glass plate | PET plate |
| Example 11 | ISB-DVE (22) DEGV (3) | OXT-212 (50) | CELLOXIDE 2021P (10) X-22-163 (15) | 53 | 5 | 400 | 450 | Good | VG | VG |
| Example 12 | ONB-DVE (22) DEGV (3) | ALOX (50) | CELLOXIDE 2021P (10) EP0419 (15) | 53 | 5 | 350 | 400 | Good | VG | VG |

The compounds used in the examples and comparative examples are as follows.

Vinyl Ether Compounds

Hydroxy-Free Multifunctional Vinyl Ether Compounds

ISB-DVE: the compound represented by Formula (a-1-1), trade name ISB-DVE, supplied by Daicel Corporation

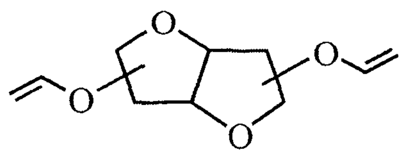

(a-1-1)

ONB-DVE: the compound represented by Formula (a-1-2), trade name ONB-DVE, supplied by Daicel Corporation

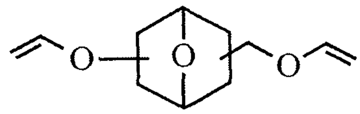

(a-1-2)

4CH-DVE: cyclohexanediol divinyl ether, trade name 4CH-DVE, supplied by Daicel Corporation
TEGDVE: triethylene glycol divinyl ether, trade name TEGDVE, supplied by Nippon Carbide Industries, Co., Inc.
Hydroxy-Containing Vinyl Ether Compound
DEGV: diethylene glycol monovinyl ether, supplied by Maruzen Petrochemical Co., Ltd.

Other Vinyl Ether Compound
CHVE: cyclohexyl vinyl ether, supplied by Wako Pure Chemical Industries, Ltd.

Oxetane Compounds

OXT-212: 3-ethyl-3-[(2-ethylhexyloxy)methyl]oxetane, trade name ARON OXETANE OXT-212, supplied by Toagosei Co., Ltd.
ALOX: 3-allyloxyoxetane
OXT-221: bis[(3-ethyloxetan-3-yl)methyl] ether, trade name ARON OXETANE OXT-221, supplied by Toagosei Co., Ltd.
OXT-121: 1,4-bis[(3-ethyl-3-oxetanylmethoxy)methyl]benzene, trade name ARON OXETANE OXT-121, supplied by Toagosei Co., Ltd.

Epoxy Compounds

CELLOXIDE 2021P: 3,4-epoxycyclohexylmethyl (3,4-epoxy)cyclohexanecarboxylate, trade name CELLOXIDE 2021P, supplied by Daicel Corporation
E-PS: 2-ethylhexyl epoxyhexahydrophthalate, trade name SANSO CIZER E-PS, supplied by New Japan Chemical Co., Ltd.
X-22-163: a silicone modified with epoxy at both termini, having an epoxy equivalent of 200 g/mol, trade name X-22-163, supplied by Shin-Etsu Chemical Co., Ltd.
EP0419: a polyorganosilsesquioxane containing an epoxy group (glycidyloxypropyl group) and an isooctyl group, having a molecular weight of 1324.37, trade name EP0419, supplied by Toyotsu Chemiplas Corporation

Photoacid Generator

Trade name CPI-110P, supplied by San-Apro Ltd., a 99.5:0.5 mixture of diphenyl[4-(phenylthio)phenyl]sulfonium hexafluorophosphate and thiodi-p-phenylenebis(diphenylsulfonium) bis(hexafluorophosphate)

Industrial Applicability

The curable composition containing the monomer composition according to the present invention has low viscosity and offers excellent dischargeability before ultraviolet irradiation and, upon ultraviolet irradiation, can be rapidly cured even in the presence of oxygen and/or water, to form a cured product having excellent adhesion to a wide variety of substrates. The curable composition resists deterioration in curability even when absorbing moisture from the air during the storage process. Namely, the curable composition has excellent storage stability. In addition, the curable composition according to the present invention, as having excellent curability, less causes monomers to remain as unreacted, and significantly less causes odors derived from such unreacted monomers. Thus, the curable composition is advantageously usable for UV-curable inkjet inks.

## Claims

1. A monomer composition comprising monofunctional cationically polymerizable monomer(s) and multifunctional cationically polymerizable monomer(s),
   the content of the monofunctional cationically polymerizable monomer(s) being 20 to 80 weight percent of the total weight of the monomer composition;
   wherein the monofunctional cationically polymerizable monomer(s) and multifunctional cationically polymerizable monomer(s) include vinyl ether compounds (A) and further include an oxetane compound (B) and/or an epoxy compound (C),
   wherein the vinyl ether compounds (A) comprise:
   a hydroxy-free multifunctional vinyl ether compound in an amount of 5 to 80 weight percent of the total weight of the monomer composition; and
   a hydroxy-containing vinyl ether compound in an amount of 0.1 weight percent to less than 10 weight percent of the total weight of the monomer composition.

2. The monomer composition according to claim 1, wherein the hydroxy-free multifunctional vinyl ether compound comprises at least one of:

   a multifunctional vinyl ether compound having a cyclic ether skeleton; and
   a multifunctional vinyl ether compound having an alicyclic skeleton.

3. The monomer composition according to claim 2, which has a content of a vinyl ether compound having a cyclic ether skeleton of less than 30 weight percent of the total weight of the monomer composition.

4. The monomer composition according to any one of claims 1 to 3, wherein the oxetane compound (B) is present in an amount of at least 5 weight percent of the total weight of the monomer composition, the oxetane compound (B) being a monomer.

5. The monomer composition according to any one of claims 1 to 4, wherein the epoxy compound (C) is present in an amount of at least 5 weight percent of the total weight of the monomer composition, the epoxy compound (C) being a monomer.

6. A curable composition comprising:

   the monomer composition according to any one of claims 1 to 5; and
   a photoacid generator.

7. The curable composition according to claim 6, further comprising a sensitizer alone or in combination with a sensitizing auxiliary.

8. Use of the curable composition according to claim 6 or 7 in a UV-curable inkjet ink.

9. A UV-curable inkjet ink comprising:

   the curable composition according to claim 6 or 7; and
   at least one selected from the group consisting of pigments and dyes.

10. The UV-curable inkjet ink according to claim 9, further comprising a dispersant.

## Patentansprüche

1. Monomerzusammensetzung, umfassend ein oder mehrere monofunktionelle kationisch polymerisierbare Monomere und ein oder mehrere multifunktionelle kationisch polymerisierbare Monomere,

   wobei der Gehalt an dem einen oder den mehreren monofunktionellen kationisch polymerisierbaren Monomeren 20 bis 80 Gewichtsprozent des Gesamtgewichts der Monomerzusammensetzung beträgt;
   wobei das eine oder die mehreren monofunktionellen kationisch polymerisierbaren Monomere und multifunktionellen kationisch polymerisierbaren Monomere Vinyletherverbindungen (A) einschließen und ferner eine Oxetanverbindung (B) und/oder eine Epoxyverbindung (C) einschließen,
   wobei die Vinyletherverbindungen (A)) umfassen:

      eine hydroxylfreie multifunktionelle Vinyletherverbindung in einer Menge von 5 bis 80 Gewichtsprozent des Gesamtgewichts der Monomerzusammensetzung; und
      eine hydroxylhaltige Vinyletherverbindung in einer Menge von 0,1 Gewichtsprozent bis weniger als 10 Gewichtsprozent des Gesamtgewichts der Monomerzusammensetzung.

2. Monomerzusammensetzung gemäß Anspruch 1, wobei die hydroxylfreie multifunktionelle Vinyletherverbindung mindestens eine umfasst aus:

   einer multifunktionellen Vinyletherverbindung mit einem zyklischen Ethergerüst; und
   einer multifunktionellen Vinyletherverbindung mit einem alizyklischen Gerüst.

3. Monomerzusammensetzung gemäß Anspruch 2, die einen Gehalt an einer Vinyletherverbindung mit einem zyklischen Ethergerüst von weniger als 30 Gewichtsprozent des Gesamtgewichts der Monomerzusammensetzung aufweist.

4. Monomerzusammensetzung gemäß einem der Ansprüche 1 bis 3, wobei die Oxetanverbindung (B) in einer Menge von mindestens 5 Gewichtsprozent des Gesamtgewichts der Monomerzusammensetzung vorliegt, wobei es sich bei der Oxetanverbindung (B) um ein Monomer handelt.

5. Monomerzusammensetzung gemäß einem der Ansprüche 1 bis 4, wobei die Epoxyverbindung (C) in einer Menge von mindestens 5 Gewichtsprozent des Gesamtgewichts der Monomerzusammensetzung vorliegt, wobei es sich bei der Epoxyverbindung (C) um ein Monomer handelt.

6. Härtbare Zusammensetzung, umfassend:

   die Monomerzusammensetzung gemäß einem der Ansprüche 1 bis 5; und
   einen Photosäuregenerator.

7. Härtbare Zusammensetzung gemäß Anspruch 6, ferner umfassend einen Sensibilisator allein oder in Kombination mit einem sensibilisierenden Hilfsmittel.

8. Verwendung der härtbaren Zusammensetzung gemäß Anspruch 6 oder 7 in einer UVhärtbaren Tintenstrahltinte.

9. UV-härtbare Tintenstrahltinte, umfassend:

   die härtbare Zusammensetzung gemäß Anspruch 6 oder 7; und
   mindestens eines, ausgewählt aus der Gruppe bestehend aus Pigmenten und Farbstoffen.

10. UV-härtbare Tintenstrahltinte gemäß Anspruch 9, ferner umfassend ein Dispergiermittel.

## Revendications

1. Composition de monomères comprenant un ou plusieurs monomères monofonctionnels polymérisables par voie cationique et monomères plurifonctionnels polymérisables par voie cationique,
la teneur des monomères monofonctionnels polymérisables par voie cationique allant de 20 à 80 pour-cent en poids du poids total de la composition de monomères ;
les monomères monofonctionnels polymérisables par voie cationique et monomères plurifonctionnels polymérisables par voie cationique incluant des composés éther de vinyle (A) et incluant également un composé oxétane (B) et/ou un composé époxy (C),
les composés éther de vinyle (A) comprenant :

   un composé éther de vinyle plurifonctionnel sans hydroxy à hauteur de 5 à 80 pour-cent en poids du poids total de la composition de monomères ; et
   un composé éther de vinyle contenant de l'hydroxy à hauteur de 0,1 pour-cent en poids jusqu'à moins de 10 pour-cent en poids du poids total de la composition de monomères.

2. Composition de monomères selon la revendication 1, dans laquelle le composé éther de vinyle plurifonctionnel sans hydroxy comprend l'un au moins parmi :

   un composé éther de vinyle plurifonctionnel ayant un squelette éther cyclique ; et
   un composé éther de vinyle plurifonctionnel ayant un squelette acyclique.

3. Composition de monomères selon la revendication 2, qui a une teneur en un composé éther de vinyle ayant un squelette éther cyclique inférieure à 30 pour-cent en poids du poids total de la composition de monomères.

4. Composition de monomères selon l'une quelconque des revendications 1 à 3, dans laquelle le composé oxétane (B) est présent à hauteur d'au moins 5 pour-cent en poids du poids total de la composition de monomères, le composé oxétane (B) étant un monomère.

5. Composition de monomères selon l'une quelconque des revendications 1 à 4, dans laquelle le composé époxy (C) est présent à hauteur d'au moins 5 pour-cent en poids du poids total de la composition de monomères, le composé époxy (C) étant un monomère.

6. Composition durcissable comprenant :

   la composition de monomères selon l'une quelconque des revendications 1 à 5 ; et
   un générateur de photoacide.

7. Composition durcissable selon la revendication 6, comprenant en outre un agent sensibilisant seul ou associé à un auxiliaire de sensibilisation.

8. Utilisation de la composition durcissable selon la revendication 6 ou 7 dans une encre pour jet d'encre durcissable aux UV.

9. Encre pour jet d'encre durcissable aux UV comprenant :

   la composition durcissable selon la revendication 6 or 7 ; et
   au moins un membre choisi dans le groupe constitué par des pigments et des colorants.

10. Encre pour jet d'encre durcissable aux UV selon la revendication 9, comprenant en outre un dispersant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014133057 A
- JP 2005154734 A
- JP 2007211098 A
- JP 2007211099 A
- JP 2007137926 A